# NOUVEAU FASCICULE DE BREVET EUROPEEN

(11) **EP 0 203 023 B2**
(45) Date de publication et mention de la décision concernant l'opposition: **24.08.1994**
(45) Mention de la délivrance du brevet: 20.12.1989
(21) Numéro de dépôt: 86440037.9
(22) Date de dépôt: 16.05.1986
(51) Int. Cl.: A01D 78/10

(54) **Perfectionnement aux machines de fenaison munies de plusieurs roues râteleuses**
Heuerntemaschinen mit mehreren Rechenrädern
Haymaking machines with several raking wheels

(30) Priorité: 21.05.1985 FR 8507825
(43) Date de publication de la demande: 26.11.1986
(73) Titulaire: KUHN S.A., F-67700 Saverne (FR)
(72) Inventeur: Aron, Jérôme, F-67330 Bouxwiller (FR)
(74) Mandataire: Andres, Jean-Claude

(56) Documents cités:
- AT-B- 311 106
- CH-A- 363 835
- DE-A- 3 342 962
- DE-B- 1 807 136
- DE-C- 465 846
- DE-C- 1 158 304
- FR-A- 1 176 046
- FR-A- 1 346 993
- FR-A- 1 578 007
- FR-A- 2 270 772
- GB-A- 2 107 564
- US-A- 2 598 959
- US-A- 3 449 897
- US-A- 3 941 194
- US-A- 4 342 367
- "Lely Gemini 600", LELY INDUSTRIES NV, 1980

## Description

La présente invention se rapporte à une machine de fenaison comportant notamment un châssis support de forme allongée, se composant d'une partie centrale et de deux parties latérales articulées aux extrémités de ladite partie centrale au moyen de pivots autour desquels elles peuvent être déplacées en hauteur d'un angle d'environ 90 _{°} en vue du transport ou du remisage. Ce châssis porte plusieurs roues râteleuses qui se situent sous la partie centrale et les parties latérales et qui peuvent être entraînées en rotation durant le travail autour d'axes dirigés vers le haut, au moyen d'arbres d'entraînement qui sont logés dans les parties du châssis, l'une au moins de ces roues râteleuses étant fixée à chacune desdites parties latérales du châssis.

Une machine de ce genre, connue dans la demande de brevet GB-A 2 107 564, comporte un châssis composé d'une partie centrale qui porte deux roues râteleuses et de deux parties latérales portant chacune une roue râteleuse. Pour le transport, chacune de ces parties latérales peut être pivotée vers le haut d'un angle d'environ 90 °. Ce pivotement s'effectue autour du pivot liant ces parties latérales à la partie centrale du châssis, au moyen d'un vérin hydraulique. Dans cette position, la largeur de la machine est réduite par rapport à la position de travail. Toutefois, son encombrement est encore relativement important surtout pour les déplacements sur les routes et pour le remisage. D'autre part, dans cette position relevée, les fourches de travail des roues râteleuses sont dirigées vers l'extérieur. Elles peuvent ainsi causer d'importants dégâts ou blessures à tout ce qui, comme par exemple des véhicules, des hommes ou des animaux, peut entrer en collision avec elles, aussi bien lors des déplacements qu'à l'arrêt.

Une machine similaire est connue dans le brevet FR-1 346 993. Sur cette machine les parties latérales du châssis sont déplacées manuellement vers le haut pour le transport.

Le brevet DE-1 582 167 se rapporte à une machine de fenaison comportant notamment une poutre support horizontale qui est perpendiculaire à la direction d'avancement et à laquelle sont reliées quatre roues râteleuse au moyen de bras de liaison. Ces roues râteleuses se situent derrière la poutre. Chacune nécessite son propre bras de liaison. Pour l'entraînement en rotation l'axe de chaque roue râteleuse doit être relié par un arbre de transmission articulé et téléscopique à des moyens de transmission prévus au niveau de la poutre support.

Dans un des modes de réalistion décrit, chaque bras de liaison est réalisé en deux parties. L'une de ces parties est articulée sur une tige parallèle à la poutre support et peut pivoter d'une manière très limitée autour de cette tige pour suivre les dénivellations du sol. L'autre partie est liée à la roue râteleuse et peut être tournée sur elle-même pour amener ladite roue râteleuse dans une position verticale pour le transport. Cette rotation ne permet toutefois pas une importante réduction de l'encombrement de la machine puisque la longueur de la poutre transversale demeure inchangée. Cet agencement est compliqué et ne permet pas de réduire la largeur de la machine de telle sorte qu'elle puisse être transportée sur les routes et qu'elle occupe peu ce place au remisage.

La présente invention a pour but de remédier à ces inconvénients. Elle doit notamment permettre une importante réduction de l'encombrement de la machine pour le transport et le remisage et une diminution du risque encouru par le voisinage.

A cet effet, selon l'invention, sur une machine telle que décrite dans l'introduction, chaque partie latérale du châssis comporte un segment auquel est reliée au moins une roue râteleuse et qui peut tourner avec cette roue râteleuse par rapport à un second segment de chaque partie latérale autour d'un axe de pivotement qui coïncide avec l'axe longitudinal de la partie latérale, pour amener ladite roue râteleuse sensiblement au-dessus de la partie centrale avec les fourches de travail orientées vers le milieu de la machine, lorsque lesdites parties latérales sont déplacées en hauteur autour des pivots les reliant à la partie centrale du châssis.

Par conséquent, dans la position de transport ou de remisage, une ou chaque roue râteleuse qui est rattachée à une partie latérale du châssis peut être rapprochée de la partie centrale du châssis et être amenée au-dessus de cette partie centrale en la faisant tourner d'environ 180 autour de l'axe de pivotement précité. L'encombrement de la machine est ainsi considérablement réduit. Les fourches de travail sont orientées vers le milieu de la machine et non plus vers l'extérieur comme sur la machine connue. Avec cette position, on supprime pratiquement tout risque de collision avec les fourches.

Selon une autre caractéristique de l'invention, le pivotement d'une ou de chaque roue râteleuse qui est fixée à une parti latérale du châssis, autour de l'axe précité, est combiné avec le pivotement de cette partie latérale autour du pivot sensiblement horizontal qui la relie à la partie centrale du châssis. Cette combinaison permet d'obtenir la position idéale pour le transport ou le remisage en effectuant une seule manoeuvre. On réalise ainsi un important gain de temps. De plus, la sécurité se trouve améliorée du fait que le risque de transporter la machine en ayant les fourches de travail orientées vers l'extérieur, est supprimé.

D'autres caractéristiques et avantages de l'invention ressortiront de la description qui va suivre et qui se réfère aux dessins annexés qui représentent, à titre d'exemples non limitatifs, quelques formes de réalisation de la machine selon l'invention,

Sur ces dessins:
- la figure 1 représente une machine selon l'invention en position de travail,
- La figure 2 représente la machine selon l'invention en position de transport ou de remisage,
- La figure 3 représente, à plus grande échelle, une vue de détail d'une partie latérale du châssis de la machine,
- La figure 4 représente une vue de dessus de la partie latérale du châssis,
- La figure 5 représente une coupe partielle de la partie latérale du châssis,
- La figure 6 représente une variante de réalisation de la partie latérale du châssis dans la position de travail,
- La figure 7 représente une coupe selon le plan VII-VII de la figure 6,
- La figure 8 représente la variante de réalisation représentée sur la figure 6 dans la position ce transport ou de remisage,
- La figure 9 représente une autre variante de réalisation de la partie latérale du châssis, dans la position de travail,
- La figure 10 représente une coupe selon le plan X-X de la figure 9,
- La figure 11 représente la variante de réalisation représentée sur la figure 9 dans la position de transport ou de remisage,
- La figure 12 représente une coupe selon le plan XII-XII de la figure 11.

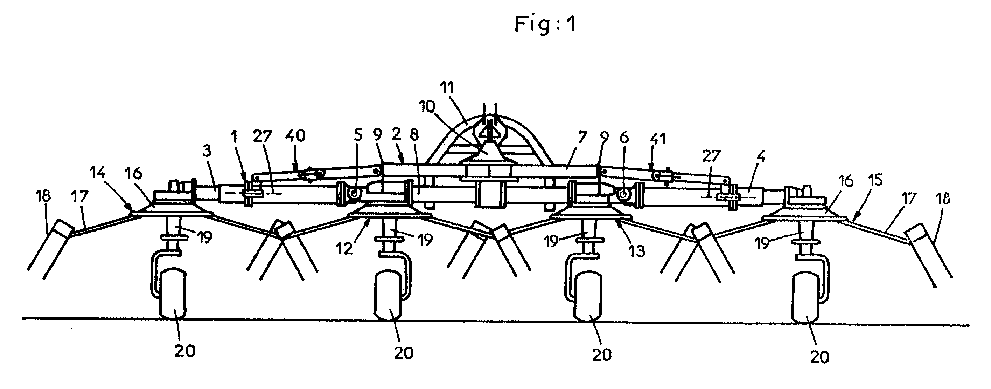

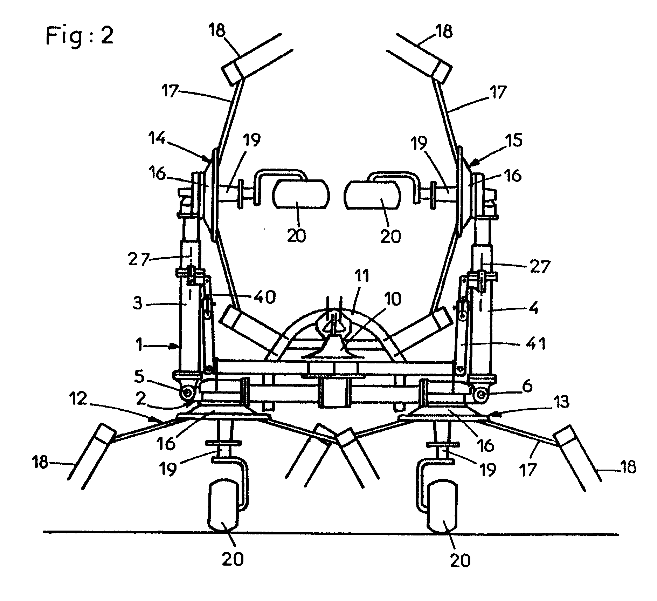

Telle qu'elle est représentée sur les figures 1 et 2, la machine selon l'invention comporte un châssis support (1) de forme allongée. Ce châssis est constitué d'une partie centrale (2) et de deux parties latérales (3 et 4) qui sont articulées aux extrémités de ladite partie centrale au moyen de pivots (5 et 6) sensiblement horizontaux.

Cette partie centrale (2) est elle-même constituée par deux longerons (7 et 8) sensiblement parallèles et qui sont reliés entre eux au moyen de plaques (9). Au longeron (7) est reliée une poutre de liaison (10) qui s'étend sensiblement perpendiculairement au châssis (1) et dont l'autre extrémité porte un chevalet d'attelage (11). Ce chevalet (11) est muni de trois points d'accouplement servant à fixer la machine au dispositif d'attelage trois points d'un tracteur d'entraînement non représenté.

Dans l'exemple représenté, la partie centrale (2) du châssis (1) porte deux roues râteleuses (12 et 13) tandis que chacune des parties latérales (3 et 4) porte une roue râteleuse (14 et 15) à son extrémité la plus éloignée. Lesdites roues (12 à 15) se situent directement sous la partie centrale (2) et les parties latérales (3 et 4) du châssis (1). Elles sont toutes sensiblement identiques. Chacune est constituée par un moyeu (16) auquel sont fixés plusieurs bras (17) portant des fourches de travail (18) à leurs extrémités extérieures. Chaque moyeu (16) est monté de manière à pouvoir tourner sur un axe fixe (19) sensiblement vertical ou incliné dans la direction d'avancement de la machine. Ces axes (19) sont reliés au châssis (1) et portent à leurs extrémités inférieures des roulettes (20) permettant de déplacer la machine sur le sol durant le travail.

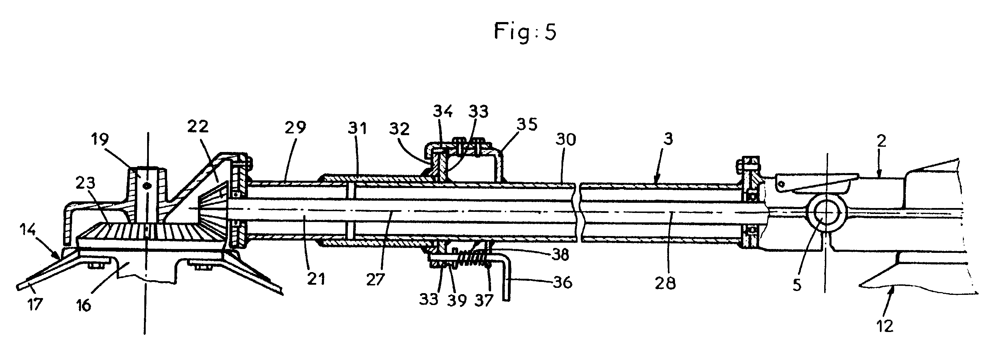

Dans la position de travail qui est représentée sur la figure 1, les quatre roues râteleuses sont sensiblement alignées. Elles sont entraînées en rotation d'une manière connue en soi à partir de l'arbre de prise de force du tracteur d'entraînement. A cet effet, des arbres d'entraînement (21) munis de pignons (22) qui coopèrent avec des couronnes dentées (23) reliées aux moyeux (16) sont logés dans les parties (3, 4 et 8) du châssis (1) (voir figure 5). Les roues râteleuses (12 et 14) et les roues râteleuses (13 et 15) tournent alors en convergence à l'avant - vu dans le sens d'avancement -. Par suite de cette rotation, leurs fourches (18) déplacent le fourrage et assurent un fanage d'excellente qualité. Il est bien évident que des roues râteleuses destinées à effectuer des andains ou bien pouvant réaliser à la fois le fanage et l'andainage, peuvent être prévues sur cette machine.

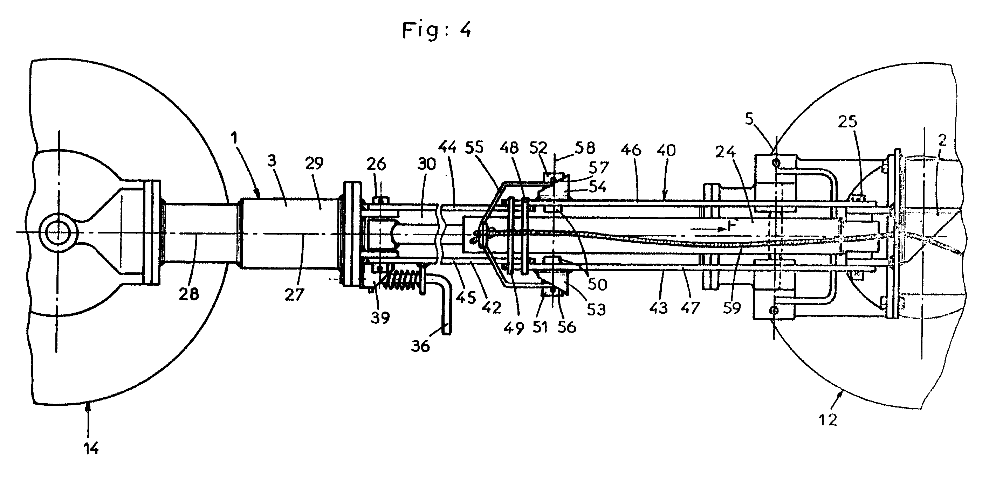

Pour le transport ou le remisage, les parties extérieures (3 et 4) du châssis (1) peuvent être déplacées vers le haut d'un angle d'environ 90 autour des pivots (5 et 6), en vue de réduire l'encombrement de la machine (figure 2). Le déplacement de chacune de ces parties (3 et 4) est avantageusement assuré au moyen d'un vérin hydraulique (24). Comme cela ressort clairement de la figure 4, chaque vérin (24) est articulé à la partie centrale (2) du châssis (1) au moyen d'un axe (25) et à la partie latérale (3 ou 4) correspondante au moyen d'un axe (26). L'actionnement de ces vérins (24) se fait avantageusement à partir du tracteur. Ils peuvent être à double ou à simple effet. Dans ce dernier cas, le retour des parties latérales (3 et 4) dans la position de travail se fait sous l'effet de leur propre poids. Les arbres d'entraînement (21) des roues râteleuses extérieures (14 et 15) comportent des articulations au niveau des pivots (5 et 6), de manière à pouvoir pivoter avec les parties latérales (3 et 4) du châssis (1).

Conformément à l'invention, une ou chaque partie latérale (3 ou 4) du châssis (1) comporte un axe de pivotement (27) permettant de modifier la position de la roue râteleuse (14 ou 15) qui est fixée à cette partie latérale (3 ou 4) lorsque celle-ci est déplacée autour du pivot (5 ou 6). Le pivotement autour de cet axe (27) permet de réduire davantage l'encombrement de la machine. En sus, il permet de modifier l'orientation des fourches (18) des roues râteleuses (14 et 15) lorsqu'elles sont relevées, afin de réduire le risque de collision. Dans le cas où une seule des roues râteleuses (14 et 15) est orientable, il est avantageux que ce soit celle qui se trouve vers le milieu de la route au transport.

Dans les différents exemples représentés sur les figures annexées chaque axe de pivotement (27) coïncide avec l'axe longitudinal (28) de la partie latérale (3 ou 4) correspondante du châssis (1). Cette position permet de rapprocher les roues râteleuses (14 et 15) de la partie centre (2) du châssis (1) et de les amener au-dessus de cette partie, en les faisant simplement tourner d'environ 180 autour de ces axes (27). La largeur de la machine est alors réduite et les fourches (18) de ces roues râteleuses (14 et 15) sont orientées vers le milieu de la machine.

Comme cela ressort clairement de la figure 5, la partie latérale (3 ou 4) correspondante est réalisée en deux segments (29 et 30) emboîtés l'un dans l'autre. Le segment extérieur (29) auquel est reliée la roue râteleuse (14 ou 15) peut tourner par rapport au segment intérieur (30), autour de l'axe longitudinal (28). Ledit segment extérieur (29) comporte un fourreau (31) dans lequel pénètre l'extrémité du segment intérieur (30). Chaque segment (29 et 30) est muni d'un flasque (32 et 33). Ces flasques (32 et 33) forment des butées limitant l'emboîtement des deux segments (29 et 30). Le segment extérieur (29) est en sus retenu axialement au moyen de brides (34) fixés au moyen de vis sur des supports (35) soudés sur le segment intérieur (30).

Le segment intérieur (30) comporte par ailleurs un verrou (36) pour l'immobilisation en rotation du segment extérieur (29) durant le travail ou le transport. Ce verrou (36) qui est guidé dans une patte (37) et dans le flasque (33) du segment intérieur (30), peut être introduit dans deux orifices prévus dans le flasque (32) du segment extérieur (29). Ces orifices correspondent respectivement à la position de travail et à la position de transport ou de remisage du segment (29) et de la roue râteleuse extérieure (14 ou 15) qui y est fixée. Le verrou (36) est maintenu en position de verrouillage par un ressort (38) et en position déverrouillée par une butée (39).

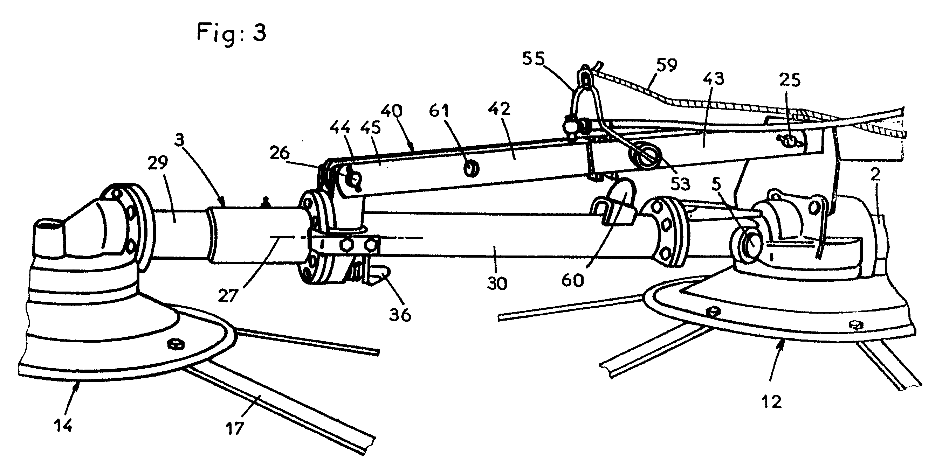

A chaque partie latérale (3 ou 4) du châssis (1) est associé un dispositif de contrôle (40 ou 41) de ses déplacements autour de son pivot (5 ou 6) (voir notamment les figures 3 et 4). Chacun de ces dispositifs (40 ou 41) est constitué par deux parties télescopiques (42 et 43) réalisées au moyen de longerons (44 et 45) et (46 et 47). La partie coulissante (42) de chaque dispositif de contrôle (40 ou 41) est artiulée sur le segment intérieur (30) de la partie latérale (3 ou 4) du châssis (1) tandis que la partie non coulissante (43) est articulée sur la plaque (9) de la partie centrale (2) dudit châssis. Lesdites articulations sont assurées au moyen des axes (25 et 26) servant également à articuler les vérins hydrauliques (24) comme décrit précédemment.

Lors des déplacements des parties latérales (3 ou 4) du châssis (1), les dispositifs de contrôle (40, 41) se rétractent ou s'étirent selon qu'on passe dans la position de transport ou dans la position de travail. Pour limiter ces déplacements, la partie coulissante (42) comporte une butée mobile (48) et la partie non coulissante (43) comporte un arrêt (49) et une butée réglable (50). Dans la position de travail, ladite butée mobile (48) se situe entre la butée réglable (50) et l'arrêt (49) de la partie non coulissante (43). Durant le travail, elle peint se déplacer entre cet arrêt (49) et la butée réglable (50) de manière à permettre à la partie latérale (3 ou 4) du châssis (1) et à la roue râteleuse (14 ou 15) correspondante de suivre des dénivellations du sol.

Afin de pouvoir amener les parties latérales (3 et 4) du châssis (1) dans la position de transport, il faut préalablement dégager les butées réglables (50). Cette obligation évite le relevage accidentel desdites parties latérales. Ces butées réglables (50) se composent de deux doigts (51 et 52) montés de manière à pouvoir tourner et coulisser axialement dans des logements (53 et 54) prévus sur les longerons (46 et 47) de la partie non coulissante (43) de chaque dispositif de contrôle (40 ou 41). Lesdits doigts sont reliés entre eux au moyen d'un étrier (55) qui est utilisé pour leur réglage. Cet étrier (55) est réalisé tel un ressort, de sorte qu'il pousse ces doigts (51 et 52) dans la position dans laquelle ils limitent les déplacements de la partie coulissante (42). Cette position est représentée sur la figure 4. Chacun des logements (53 et 54) comporte une rampe inclinée (56 et 57). Ces rampes (56 et 57) sont symétriques par rapport à l'axe longitudinal (28). Chacune des branches de l'étrier (55) s'appuie contre l'une de ces rampes (56 et 57) et, peut être déplacée le long de la rampe correspondante par simple pivotement autour de l'axe (58) des doigts (51 et 52). Ce pivotement peut être asuré au moyen d'un câble (59) permettant de tirer l'étrier (55) dans le sens indiqué par la flèche (F). Ce câble (59) est avantageusement accessible à partir du siège du tracteur d'entraînement. Lors dudit déplacement des deux branches de l'étrier (55) , elles s'écartent et déplacent axialement les doigts (51 et 52). Ceux-ci s'écartent d'une manière similaire et libèrent le passage pour la butée (48) solidaire de la partie coulissante (42) du dispositif de contrôle (40 ou 41). Les parties latérales (3 et 4) du châssis peuvent alors être relevées dans la position de transport au moyen des vérins hydrauliques (24). Cette position est définie au moyen de butées (60) qui limitent ledit relevage. Ces butées (60) sont prévues sur chacune des parties latérales (3 et 4). Dans cette position, les roues râteleuses (14 et 15) peuvent être orientées autour des axes (27) comme décrit précédemment.

Lorsqu'elles sont relevées, les deux parties latérales (3 et 4) du châssis (1) peuvent être verrouillées au moyen de ces mêmes doigts (51 et 52). Pour cela les longerons (44 et 45) de la partie coulissante (42) de chaque dispositif de contrôle (40, 41) comportent des orifices (61) dans lesquels peuvent s'engager les extrémités des doigts (51 et 52) dès que la position de transport est atteinte. Cet engagement s'effectue par simple retour de l'étrier (55) et par conséquent des doigts (51 et 52) dans la position qu'ils occupent durant le travail. Ce retour se fait automatiquement par glissement des branches de l'étrier (55) le long des rampes (56 et 57), lequel glissement est obtenu grâce à la constitution de cet étrier (55) tel un ressort, et après relâchement du câble (59).

Pour revenir dans la position de travail, il suffit d'orienter les roues râteleuses (14 et 15) par pivotement autour des axes (27) et de déverrouiller la partie coulissante (42) des dispositifs de contrôle (40 et 41) en retirant les doigts (51 et 52) des orifices (61) au moyen de l'étrier (55).

Les parties latérales (3 et 4) du châssis (1) peuvent alors être rabattues autour des pivots (5 et 6). Ce rabattement peut être obtenu soit sous l'effet du propre poids de ces parties latérales (3 et 4), soit au moyen des vérins hydrauliques (24) s'ils sont à double effet. Durant les changements de positions des parties latérales (3 et 4), les doigts (51 et 52) sont maintenus en position hors service par les longerons (44 et 45) des parties coulissantes (42) des dispositifs de contrôle (40 et 41).

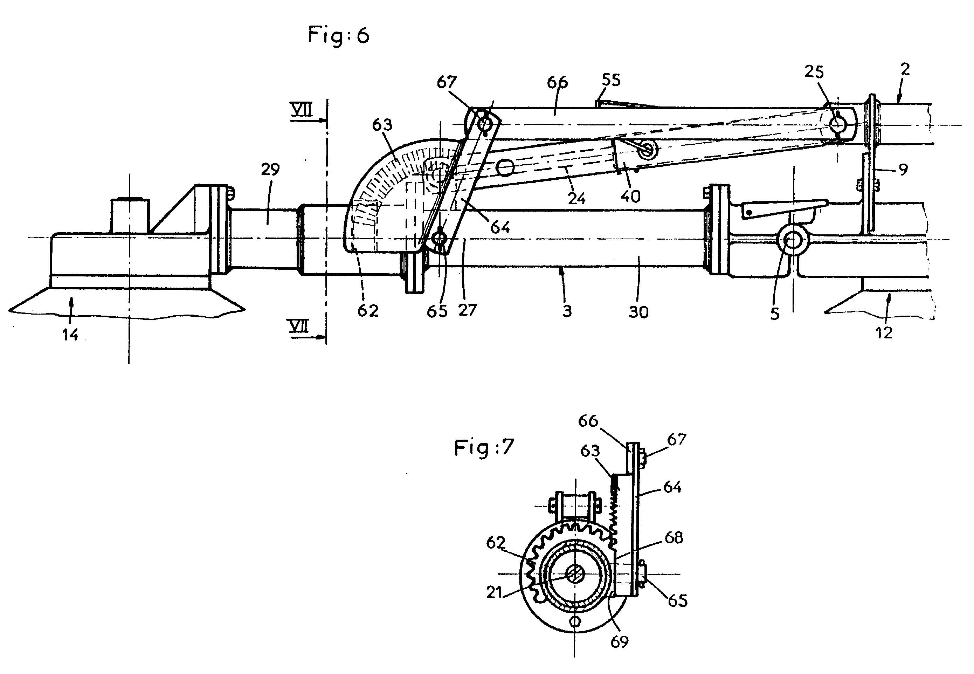

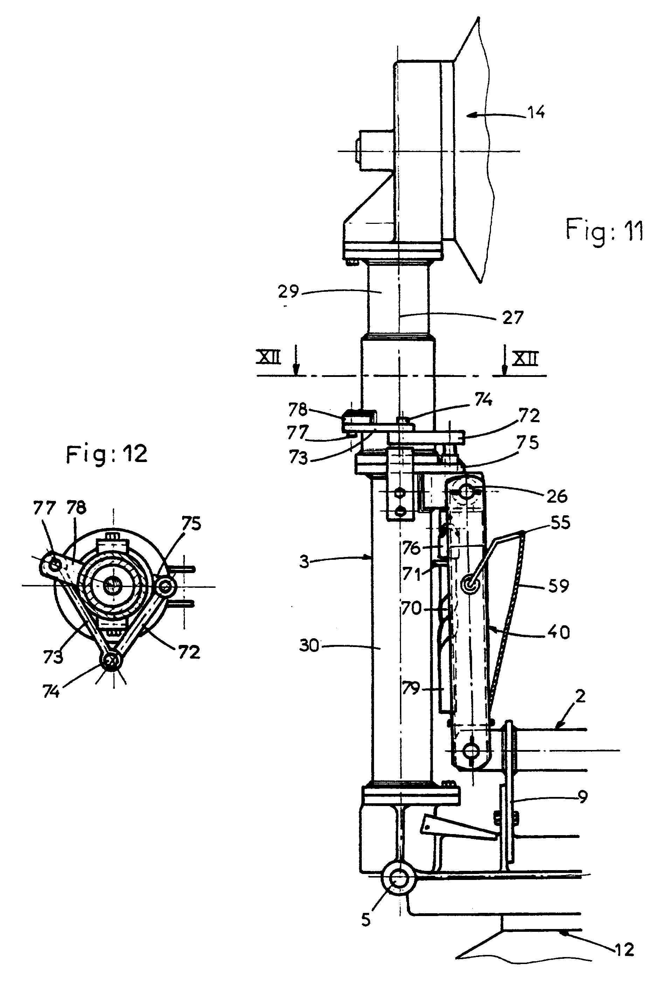

Selon une autre caractéristique de l'invention qui ressort notamment des figures 6 et 12, le pivotement des roues râteleuses (14 et 15) qui sont fixées aux parties latérales (3 et 4) du châssis (1) autour des axes de pivotement (27), est combiné avec le déplacement de ces parties latérales autour de leurs pivots (5 et 6) sensiblement horizontaux. Cette combinaison facilite le travail de l'utilisateur et assure qu'au transport ou au remisage la machine est moins volumineuse et présente le maximum de sécurité.

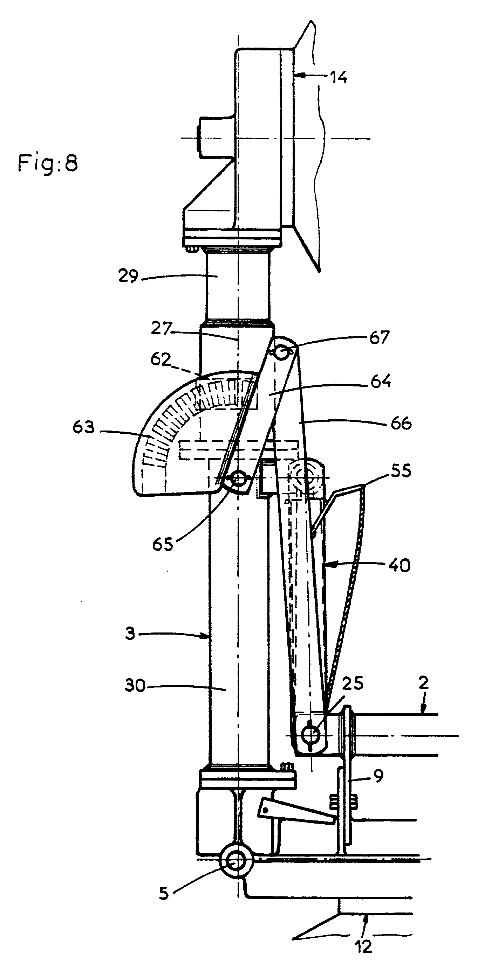

Dans l'exemple de réalisation des figures 6 à 8, le segment extérieur (29) de chacune des parties latérales (3 et 4) comporte un secteur denté (62) qui l'entoure sur environ 180_{°}. Un second secteur denté (63) en forme d'arc de cercle, qui coopère avec ledit secteur (62), est prévu sur une tringle (64) articulée d'une part sur le segment intérieur (30) de la partie latérale (3 ou 4) au moyen d'un axe (65) de d'autre part sur une tige (66) au moyen d'un axe (67). Cette tige (66) est elle-même articulée sur la partie centrale (2) du châssis au moyen de l'axe (25). Ainsi, lorsque les parties latérales (3 et 4) du châssis sont déplacées comme décrit précédemment, de la position de travail (figure 6) dans la position de transport (figure 8) et inversement autour de leurs pivots (5 et 6), il se produit un déplacement des secteurs dentés (62) solidaires des segments extérieurs (29) par rapport aux seconds secteurs dentés (63). En raison de l'engrènement de leurs dents, les secteurs dentés (62) roulent sur les seconds secteurs dentés (63) et provoquent le pivotement des segments extérieurs (29) avec les roues râteleuses (14 et 15) autour des axes de pivotement (27).

Ces secteurs dentés (62 et 63) empêchent par ailleurs tout déplacement des segments extérieurs (29) des parties latérales (3 et 4) du châssis (1) par rapport à leurs segments intérieurs (30), aussi bien dans la position de travail que dans la position de transport.

On voit sur la figure 7 que les deux secteurs (62 et 63) comportent une section lisse (68 et 69) qui sont en contact l'une avec l'autre lorsque la machine est en position de travail. Ces sections permettent aux roues râteleuses extérieures (14 et 15) de suivre les inégalités du sol, sans que leur inclinaison par rapport au sens d'avancement soit modifiée.

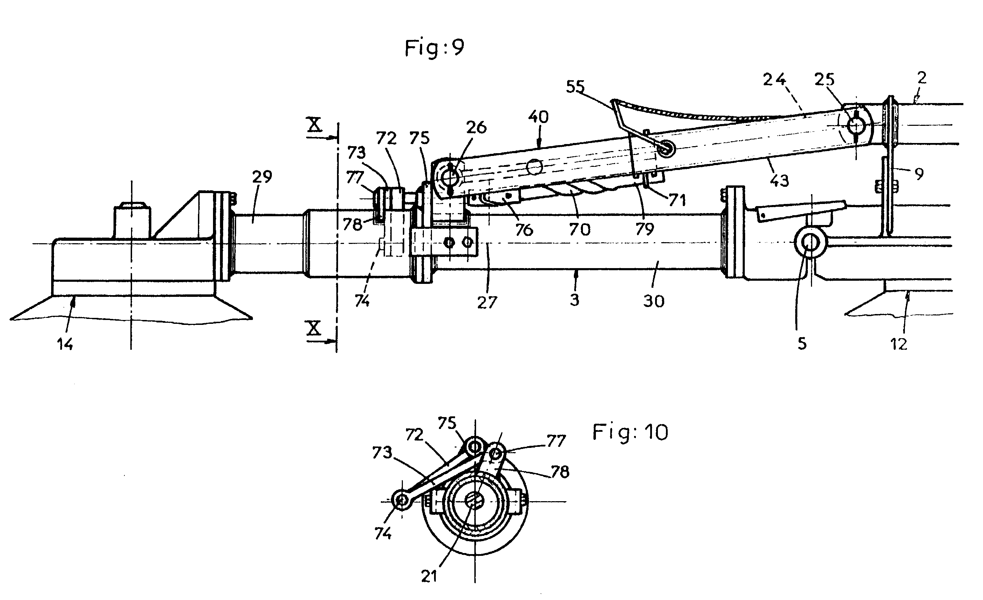

Dans l'exemple de réalisation des figures 9 à 12, une tringle vrillée (70) d'au moins 180_{°} est utilisée pour combiner le pivotement de chaque roue râteleuse extérieure (14 et 15) autour de son axe (27) avec le déplacement autour des pivots (5 et 6). Cette tringle (70) est engagée dans un guide (71) solidaire de la partie non coulissante (43) du dispositif de contrôle (40 ou 41) correspondant. Ladite tringle et le logement dans le guide (71) dans lequel elle est ajustée, ont une section polygonale. Dans l'exemple représenté, ladite section est carrée.

Cette tringle est par ailleurs reliée au segment extérieur (29) de la partie latérale (3 ou 4) du châssis (1) au moyen d'une manivelle (72) et d'une bielle (73) qui sont articulées entre elles par un axe (74). Ladite manivelle (72) est guidée dans un palier (75) solidaire du segment intérieur (30) de la partie latérale (3 ou 4) et est reliée à la tringle vrillée (70) au moyen d'un joint universel (76). Ce joint permet une modification de sa position par rapport à la tringle. La bielle (73) est elle-même articulée au segment extérieur (29) à l'aide d'un axe (77) sensiblement parallèle à ce dernier. Cet axe (77) est engagé dans une patte (78) soudée sur la périphérie dudit segment (29) et ce, pratiquement sur le côté opposé à celui sur lequel se situe la roue râteleuse extérieure (14 ou 15) correspondante.

Lorsque les parties latérales (3 et 4) avec les roues râteleuses extérieures (14 et 15) sont déplacées autour des pivots (5 et 6) pour passer de la position de travail (figure 9) dans la position de transport (figure 11) ou inversement, la tringle (70) se déplace longitudinalement dans le guide (71). Par suite de son vrillage, elle tourne sur elle-même lors de ce déplacement. Elle entraîne alors la manivelle (72), laquelle exerce une traction sur la bielle (73) qui fait tourner le segment extérieur (29) et la roue râteleuse extérieure (14 ou 15) correspondante autour de l'axe de pivotement (27). Chaque roue râteleuse extérieure (14 ou 15) subit ainsi une rotation d'environ 180 de telle sorte qu'au transport elle occupe la position conforme à l'invention (voir figure 2). Elle est maintenue dans cette position de transport par la tringle (70) et le guide (71).

Dans la position de travail, les efforts sur la tringle (70) sont plus importants en raison de la résistance du fourrage et du frottement des fourches de travail (18) sur le sol. Afin de limiter ces efforts, il est avantageux d'agencer l'ensemble constitué par la tringle (70), la manivelle (72) et la bielle (73) de telle sorte que, comme cela est représenté sur la figure 10, dans la position de travail, la bielle (73) s'appuie contre le segment extérieur (29) de la partie latérale (3 ou 4) et se situe par rapport à la manivelle (72) sur le côté opposé à celui sur lequel elle se trouve dans la position de transport. Dans cette position, la bielle (73) et la manivelle (72) immobilisent le segment extérieur (29) à la manière d'une genouillière et limitent les efforts s'exerçant sur la tringle (70).

D'autre part, la tringle (70) comporte une partie droite (79) à son extrémité. Cette partie droite permet aux roues râteleuses extérieures (14 et 15) de suivre les dénivellations du sol durant le travail, sans que ces déplacements ne provoquent un début de rotation autour des axes de pivotement (27).

Il est bien évident que la structure du châssis (1) de la machine et que le nombre de roues râteleuses peuvent varier sans sortir du cadre de la présente invention.

## Revendications

1. Machine de fenaison comportant notamment un châssis support (1) de forme allongée, se composant d'une partie centrale (2) et de deux parties latérales (3, 4) articulées aux extrémités de ladite partie centrale au moyen de pivots (5, 6) autour desquels elles peuvent être déplacées en hauteur d'un angle d'environ 90 en vue du transport ou du remisage, lequel châssis (1) porte plusieurs roues râteleuses (12, 13, 14, 15) se situant sous la partie centrale (2) et les parties latérales (3, 4) et pouvant être entraînées en rotation durant le travail autour d'axes (19) dirigés vers le haut, au moyen d'arbres d'entraînement (21) qui sont logés dans les parties (2, 3 et 4) du châssis (1), l'une au moins de ces roues râteleuses étant fixée à chacune desdites parties latérales (3 et 4) du châssis (1), machine caractérisée par le fait que chacune de ces parties latérales (3, 4) du châssis (1) comporte un segment (29) auquel est reliée au moins une roue râteleuse (14, 15) et qui peut tourner avec cette roue râteleuse (14, 15) par rapport à un second segment (30) de chaque partie latérale (3, 4) autour d'un axe de pivotement (27) qui coïncide avec l'axe longitudinal (28) de la partie latérale (3 ou 4), pour amener ladite roue râteleuse (14, 15) sensiblement au-dessus de la partie centrale (2) avec les fourches de travail orientées vers le milieu de la machine, lorsque lesdites parties latérales (3, 4) sont déplacées en hauteur autour des pivots (5, 6) les reliant à la partie centrale (2).

2. Machine selon la revendication 1, caractérisée par le fait que la partie latérale (3 ou 4) du châssis support (1) est réalisée en deux segments (29 et 30) emboîtés l'un dans l'autre, le segment extérieur (29) pouvant tourner autour de son axe longitudinal (28) par rapport au segment intérieur (30).

3. Machine selon la revendication 2, caractérisée par le fait que les deux segments (29 et 30) sont assemblés au moyen de brides (34).

4. Machine selon l'une des revendications 1 à 3, caractérisée par le fait qu'elle est munie d'un verrou (36) pour l'immobilisation du segment extérieur (29) avec la roue râteleuse (14 ou 15).

5. Machine selon l'une quelconque des revendications précédentes, caractérisée par le fait qu'elle comporte deux parties latérales (3 et 4) munies chacune d'un axe de pivotement (27).

6. Machine selon l'une quelconque des revendications précédentes, caractérisée par le fait qu'elle comporte d'une manière connue en soi, un dispositif de contrôle (40 ou 41) du pivotement de chaque partie latérale (3 ou 4) du châssis (1), ce dispositif étant articulé sur la partie centrale (2) du châssis (1) et ladite partie latérale.

7. Machine selon la revendication 6, caractérisée par le fait que le dispositif de contrôle (40 ou 41) est constitué en deux parties télescopiques (42 et 43).

8. Machine selon la revendication 7, caractérisée par le fait que le dispositif de contrôle (40 ou 41) comporte une butée mobile (48), un arrêt (49) et une butée réglable (50) pour limiter les débattements de la partie latérale (3 ou 4) correspondante.

9. Machine selon la revendication 8, caractérisée par le fait que la butée réglable (50) se compose de deux doigts (51, 52) reliés entre eux au moyen d'un étrier (55) et pouvant coulisser axialement dans des logements (53, 54) prévus sur la partie non coulissante (43) du dispositif de contrôle (40 ou 41).

10. Machine selon la revendication 9, caractérisée par le fait que la partie coulissante (42) comporte des orifices (61) dans lesquels peuvent s'engager les extrémités des doigts (51 et 52) en vue du verrrouillage de la partie latérale (3 ou 4) correspondante du châssis (1) dans la position de transport.

11. Machine selon l'une quelconque des revendications précédentes, caractérisée par le fait que le pivotement de chaque roue râteleuse (14 ou 15) qui est fixée à une partie latérale (3 ou 4) du châssis (1) autour de l'axe de pivotement (27) est combiné avec le pivotement vers le haut ou vers le bas de cette partie latérale (3 ou 4).

12. Machine selon la revendication 11, caractérisée par le fait que les deux pivotements sont combinés au moyen de deux secteurs dentés (62 et 63) prévus l'un sur le segment extérieur (29) de la partie latérale (3 ou 4) du châssis (1) et l'autre sur une tringle (64) articulée d'une part sur le segment intérieur (30) de cette partie latérale (3 ou 4) et d'autre part sur une tige (66), elle même articulée sur la partie centrale (2) du châssis (1).

13. Machine selon la revendication 12, caractérisée par le fait que chaque secteur denté (62 et 63) comporte une section lisse (69 et 68).

14. Machine selon la revendication 11, caractérisée par le fait que les deux pivotements sont combinés au moyen d'une tringle vrillée (70) reliée au segment extérieur (29) de la partie latérale (3 ou 4) correspondante du châssis (1) et engagée dans un guide (71) solidaire de la partie non coulissante (43) du dispositif de contrôle (40 ou 41).

15. Machine selon la revendication 14, caractérisée par le fait que la tringle vrillée (70) et son logement dans le guide (71) ont une section carrée.

16. Machine selon la revendication 14 ou 15, caractérisée par le fait que la tringle vrillée (70) est reliée au segment extérieur (29) de la partie latérale (3 ou 4) du châssis (1) au moyen d'une manivelle (72) articulée à une bielle (73) , elle-même articulée sur ledit segment.

17. Machine selon la revendication 16, caractérisée par le fait qu'entre la tringle vrillée (70) et la manivelle (72) est disposé un joint universel (76).

18. Machine selon la revendication 14, caractérisée par le fait que la tringle (70) est vrillée d'au moins 180_{°}.

19. Machine selon l'une quelconque des revendications 14 à 18, caractérisée par le fait que la tringle vrillée (70) comporte une partie droite (79).

20. Machine selon l'une quelconque des revendications 14 à 19, caractérisée par le fait que dans la position de travail la bielle (73) s'appuie contre le segment extérieur (29) de la partie latérale (3 ou 4) correspondante et se situe, par rapport à la manivelle (72), sur le côté opposé à celui sur lequel elle se situe dans la position de transport.

## Claims

1. A haymaking machine having in particular a supporting frame (1) of elongated shape, composed of one central portion (2) and two side portions (3, 4) hinged to the ends of the said central portion by means of pivots (5, 6) about which they can be displaced in height through an angle of about 90 _{°} in view of transport or storage, the frame (1) carrying a number of rake-wheels (12, 13, 14, 15) situated below the central portion (2) and the side portions (3, 4) and able during work to be driven in rotation about axles (19) directed upwards by means of driving shafts (21) housed in the portions (2, 3 and 4) of the frame (1), at least one of the said rake-wheels being attached to each one of the said side portions (3 and 4) of the frame (1), the machine being characterized by the fact that each of the said side portions (3, 4) of the frame (1) includes a segment (29) to which at least one rake-wheel (14, 15) is connected and which can turn with this rake-wheel (14, 15) with respect to a second segment (30) of each side portion (3, 4) about an axis of pivot (27) which coincides with the longitudinal axis (28) of the side portion (3 or 4), in order to bring the said rake-wheel (14, 15) substantially above the central portion (2) with the fork tools directed towards the middle of the machine when the said side portions (3, 4) are displaced in height about the pivots (5, 6) connecting them to the central portion (2).

2. A machine as in claim 1, characterized by the fact that side portion (3 or 4) of the supporting frame (1) is realized in two segments (29 and 30) nested in one another so that the outer segment (29) can turn about its longitudinal axis (28) with respect to the inner segment (30).

3. A machine as in claim 2, characterized by the fact that the two segments (29 and 30) are assembled by means of straps (34).

4. A machine as in one of the claims 1 to 3, characterized by the fact that it is equipped with a bolt (36) for fixing the outer segment (29) with the rake-wheel (14 or 15).

5. A machine as in any one of the preceding claims, characterized by the fact that it includes two side portions (3 and 4) each equipped with an axis of pivot (27).

6. A machine as in any one of the preceding claims, characterized by the fact that in a manner in itself known it includes a device (40 or 41) for controlling the pivoting of each side portion (3 or 4) of the frame (1), this device being hinged to the central portion (2) of the frame (1) and the said side portion.

7. A machine as in claim 6, characterized by the fact that the control device (40 or 41) consists of two telescopic portions (42 and 43).

8. A machine as in claim 7, characterized by the fact that the control device (40 or 41) includes a movable stop (48), a check (49) and an adjustable stop (50) for limiting the displacements of the corresponding side portion (3 or 4).

9. A machine as in claim 8, characterized by the fact that the adjustable stop (50) is composed of two fingers (51, 52) connected together by means of a stirrup (55) and able to slide axially in seats (53, 54) provided on the non-sliding portion (43) of the control device (40 or 41).

10. A machine as in claim 9, characterized by the fact that the sliding portion (42) includes apertures (61) in which the ends of the fingers (51 and 52) can engage in view of locking the corresponding side portion (3 or 4) of the frame (1) in the position for transport.

11. A machine as in any one of the preceding claims, characterized by the fact that the pivoting of reach rake-wheel (14 or 15) which is attached to a side portion (3 or 4) of the frame (1), about the axis of pivot (27) is combined with the pivoting upwards or downwards of this side portion (3 or 4).

12. A machine as in claim 11, characterized by the fact that the two pivoting actions are combined by means of two toothed sectors (62 and 63), one provided on the outer segment (29) of the side portion (3 or 4) of the frame (1) and the other on a rod (64) hinged firstly to the inner segment (30) of this side portion (3 or 4) and secondly to a rod (66) which in turn is hinged to the central portion (2) of the frame (1).

13. A machine as in claim 12, characterized by the fact that each toothed sector (62 and 63) includes a smooth section (69 and 68).

14. A machine as in claim 11, characterized by the fact that the two pivoting actions are combined by means of a twisted rod (70) connected to the outer segment (29) of the corresponding side portion (3 or 4) of the frame (1) and engaged in a guide (71) integral with the non-sliding portion (43) of the control device (40 or 41

15. A machine as in claim 14, characterized by the fact that the twisted rod (70) and its seat in the guide (71) have a square section.

16. A machine as in claim 14 or 15, characterized by the fact that the twisted rod (70) is connected to the outer segment (29) of the side portion (3 or 4) of the frame (1) by means of a crank (72) hinged to a connecting-rod (73) which itself is hinged to the said segment.

17. A machine as in claim 16, characterized by the fact that a universal joint (76) is arranged between the twisted rod (70) and the crank (72).

18. A machine as in claim 14, characterized by the fact that the rod (70) is twisted through at least 180°

19. A machine as in any of the claims 14 to 18, characterized by the fact that the twisted rod (70) includes a straight portion (79).

20. A machine as in any one of the claims 14 to 19, characterized by the fact that in the working position the connecting-rod (73) bears against the outer segment (29) of the corresponding side portion (3 or 4) and is situated with respect to the crank (72) on the side opposite to that on which it is situated in the position for transport.

## Patentansprüche

1. Heuwerbungsmaschine, die insbesonders einen langgestreckten Rahmen (1) aufweist, der sich aus einem Mittelteil (2) und zwei Seitenteilen (3, 4) zusammensetzt, die an den Enden des Mittelteils mittels Zapfen (5, 6), um welche sie für den Transport oder das Einstellen in einem Winkel von etwa 90 nach oben geschwenkt werden können, schwenkbar gelagert sind, wobei der Rahmen (1) mehrere unterhalb des Mittelteils (2) und der Seitenteile (3, 4) befindliche Rechräder (12, 13, 14, 15) trägt, die während des Betriebs um aufrecht stehende Achsen (19) in Drehung versetzt werden können mittels Antriebswellen (21), die in den Teilen (2, 3 und 4) des Rahmens (1) gelagert sind, wobei jeweils an einem Seitenteil (3 und 4) des Rahmens (1) zumindest eines der Rechräder befestigt ist, welche Maschine dadurch gekennzeichnet ist, dass jeder der Seitenteile (3, 4) des Rahmens (1) ein Segment (29) aufweist, mit welchem zumindest ein Rechrad (14, 15) verbunden ist und das mit diesem Rechrad (14, 15) in bezug auf ein zweites Segment (30) jedes Seitenteils (3, 4) um eine Schwenkachse (27), die mit der Längsachse (28) des Seitenteils (3 oder 4) zusammenfällt, drehbar ist, um das Rechrad (14, 15) im wesentlichen über den Mittelteil (2) mit zur Mitte der Maschine ausgerichteten Arbeitszinken zu bringen, wenn die Seitenteile (3, 4) um die sie mit dem Mittelteil (2) verbindenden Zapfen (5, 6) nach oben geschwenkt sind.

2. Maschine nach Anspruch 1, dadurch gekennzeichnet, dass der Seitenteil (3 oder 4) des Rahmens (1) aus zwei ineinandergefügten Segmenten (29 und 30) gebildet ist, wobei das äussere Segment (29) um seine Längsachse (28) in bezug auf das innere Segment (30) drehbar ist.

3. Maschine nach Anspruch 2 dadurch gekennzeichnet, dass die beiden Segmente (29 und 30) mittels Bügeln (34) zusammengehalten sind.

4. Maschine nach einem der Ansprüche 1 bis 3, dadurch gekennzeichnet, dass sie mit einer Verriegelung (36) zum Feststellen des äusseren Segments (29) mit dem Rechrad (14 oder 15) versehen ist.

5. Maschine nach irgend einem der vorhergehenden Ansprüche, dadurch gekennzeichnet, dass sie zwei Seitenteile (3 und 4) umfasst, die jeweils mit einer Schwerkachse (27) versehen sind.

6. Maschine nach irgend einem der vorhergehenden Ansprüche, dadurch gekennzeichnet, dass sie auf an sich bekannte Weise eine Steuereinrichtung (40 oder 41) für die Schwenkbewegung jedes Seitenteils (3 oder 4) des Rahmens (1) aufweist, welche Einrichtung am Mittelteil (2) des Rahmens (1) und dem Seitenteil angelenkt ist.

7. Maschine nach Anspruch 6, dadurch gekennzeichnet, dass die Steuereinrichtung (40 oder 41) aus zwei Teleskopteilen (42 und 43) besteht.

8. Maschine nach Anspruch 7, dadurch gekennzeichnet, dass die Steuereinrichtung (40 oder 41) einen beweglichen Anschlag (48), eine Sperre (49) und einen verstellbaren Anschlag (50) zur Begrenzung der Anschläge der entsprechenden Seitenteile (3 oder 4) aufweist.

9. Maschine nach Anspruch 8, dadurch gekennzeichnet, dass sich der verstellbare Anschlag (50) aus zwei zapfen (51, 52) zusammensetzt, die durch eine Bugel (55) miteinander verbunden sind und axial in Lagern (53, 54) gleiten können, die auf dem nicht gleitenden Teil (43) der Steuereinrichtung (40 oder 41) vorgesehen sind.

10. Maschine nach Anspruch 9, dadurch gekennzeichnet, dass der gleitende Teil (42) Öffnungen (61) aufweist, in welche die Enden der Zapfen (51 und 52) eingreifen können, um den entsprechenden Seitenteil (3 oder 4) des Rahmens (1) in der Transportstellung zu verriegeln.

11. Maschine nach irgend einem der vorhergehenden Ansprüche, dadurch gekennzeichnet, dass die Schwenkungsbewegung jedes an einem Seitenteil (3 oder 4) des Rahmens (1) befestigten Rechrades (14 oder 15) um die Schwenkachse (27) mit der Auf- oder Abwärtsschwenkung dieses Seitenteils (3 oder 4) kombiniert ist.

12. Maschine nach Anspruch 11, dadurch gekennzeichnet, dass die beiden Schwenkbewegungen mittels zweier Zahnsegmente (62 und 63) kombiniert werden, von denen eines am äusseren Segment (29) des Seitenteils (3 oder 4) des Rahmens (1) und das andere auf einer Stange (64) angebracht ist, die einerseits an dem inneren Segment (30) dieses Seitenteils (3 oder 4) und anderseits an einer Stange (66) angelenkt ist, die ihrerseits am Mittelteil (2) des Rahmens (1) angelenkt ist.

13. Maschine nach Anspruch 12, dadurch gekennzeichnet, dass jedes Zahnsegment (62 und 63) einen glatten Abschnitt (69 und 68) aufweist.

14. Maschine nach Anspruch 11, dadurch gekennzeichnet, dass die beiden Schwenkbewegungen durch eine schraubenförmig verdrehte Stange (70) kombiniert werden, die mit dem äusseren Segment (29) des entsprechenden Seitenteils (3 oder 4) des Rahmens (1) verbunden ist und in eine Führung (71) eingreift, die am nicht gleitenden Teil (43) der Steuereinrichtung (40 und 41) besfestigt ist.

15. Maschine nach Anspruch 14, dadurch gekennzeichnet, dass die schraubenförmig verdrehte Stange (70) und ihre Lagerung in der Führung (71) einen viereckigen Querschnitt haben.

16. Maschine nach Anspruch 14 oder 15, dadurch gekennzeichnet, dass die schraubenförmig verdrehte Stange (70) mit dem äusseren Segment (29) des entsprechenden Seitenteils (3 oder 4) des Rahmens (1) mittels einer Kurbel (72), die an eine ihrerseits am Segment angelenkten Kurbelstange (73) angelenkt ist, verbunden ist.

17. Maschine nach Anspruch 16, dadurch gekennzeichnet, dass zwischen der schraubenförmig verdrehten Stange (70) und der Kurbel (72) ein Kreuzgelenk (76) angeordnet ist.

18. Maschine nach Anspruch 14, dadurch gekennzeichnet, dass die Stange (70) über zumindest 180_{°} schraubenförmig verdreht ist.

19. Maschine nach irgend einem der Ansprüche 14 bis 18, dadurch gekennzeichnet, dass die schraubenförmig verdrehte Stange (70) einen geraden Teil (79) aufweist.

20. Maschine nach irgend einem der Ansprüche 14 bis 19, dadurch gekennzeichnet, dass sich die Kurbelstange (73) in der Betriebsstellung am äusseren Segment (29) des entsprechenden Seitenteils (3 oder 4) abstützt und sich in bezug auf die Kurbel (72) auf der Seite befindet, die jener gegenüberliegt, an welcher sie sich in Transportstellung befindet.
